# EUROPEAN PATENT SPECIFICATION

(11) **EP 4 484 685 B1**
(45) Date of publication and mention of the grant of the patent: **13.08.2025**
(21) Application number: 23182445.9
(22) Date of filing: 29.06.2023
(51) Int. Cl.: E05B 63/04, F16M 1/00

(54) **A DOOR HANDLE SYSTEM FOR A SAFETY DOOR, ESPECIALLY FOR A SLIDING DOOR OR SWING DOOR**
TÜRGRIFFSYSTEM FÜR EINE SICHERHEITSTÜR, INSBESONDERE FÜR EINE SCHIEBETÜR ODER EINE SCHWENKTÜR
SYSTÈME DE POIGNÉE DE PORTE POUR UNE PORTE DE SÉCURITÉ, EN PARTICULIER POUR UNE PORTE COULISSANTE OU UNE PORTE PIVOTANTE

(43) Date of publication of application: 01.01.2025
(73) Proprietor: SICK AG, 79183 Waldkirch (DE)
(72) Inventor: SAYCON, Omar, 6018 San Fernando Cebu (PH); PLARIZA, Julio Sandino, 6045 Talisay City, Cebu (PH); LIEW, Sheau Shiang, 79100 Iskandar Puteri, Johor (MY); FU, Mao Ai, 730009 Singapore (SG)
(74) Representative: Manitz Finsterwald Patent- und Rechtsanwaltspartnerschaft mbB

(56) References cited:
- WO-A1-2020/081702
- CN-U- 209 261 395
- DE-U1- 29 723 271
- FR-A1- 2 772 062
- NL-C- 6 340
- US-B1- 6 485 067

## Description

The invention describes a door handle system for a safety door, especially for a sliding door or swing door.

Door handle systems are used almost in every door. In the simplest form they comprise a movable bolt and a lock in which the bolt can engage. Depending on the needs, door handle systems may also comprise various electronic components which can be used to control different devices. Such door handle systems can therefore be used as safety doors and shut down devices, for example for robots, if the door is opened to avoid injuries.

Door handle system come with various options. For example, there are dedicated door handle variants for left and right door hinged installations. Locks that can be installed in either left or right combination are for example known from NL6340C or FR2772062B1. Current designs lack ease of installation and are not user-friendly for both left and right mounting in the customer's location.

The object of the present invention therefore is to improve the current door handle design in such a way that it overcomes the known problems.

The object is solved by the door handle system according to the independent claim 1. The dependent claims show preferred embodiments of the door handle system.

The door handle system according to the present invention can be used for a safety door, especially for a sliding door or swing door. The door handle system comprises a bolt unit. The bolt unit comprises a housing with a bolt opening. The bolt unit also comprises a handle. The handle is arranged at (attached to) the housing. The bolt unit comprises a frame structure with a bolt. The frame structure is arranged in the housing. The frame structure is movable with respect to the housing. The frame structure encloses a receiving room. The bolt is arranged at a first side of the frame structure, wherein a second side and a third side of the frame structure are arranged opposite to each other. The second side and the third side each comprise a gear rack directed to the receiving room, so that the gear racks of the second side and third side face each other. The bolt unit comprises a gear, especially in form of a sector gear, which is arranged within the receiving room. The handle is attached to the gear so that pressing the handle translates into a rotation of the gear. Upon rotation of the gear from a starting position to an end position, the gear is configured to get into contact with the corresponding gear rack, causing the frame structure to be displaced from a first position into a second position in relation to the housing thereby pushing the bolt out of the bolt opening.

It is very beneficial that the that there are two gear racks, because this allows the sector gear to rotate along the gear rack of the second side or around the gear rack of the third side. Therefore, the door handle system can easily be installed on safety doors that open to the left as well as on safety doors that open to the right, wherein the handle is pressed in the same direction.

In a preferred embodiment of the invention, the frame structure is in the form of a rectangle or a square.

In a preferred embodiment of the invention, the bolt is arranged within the housing if the frame structure is in the first position. Contrary to that, the bolt is pushed out of the housing if the frame structure is in the second position.

In a preferred embodiment of the invention, the frame structure is in the first position if the gear is in the starting position. Furthermore, the frame structure is in the second position if the gear is in the end position.

In a preferred embodiment of the invention, the bolt is attached to the frame structure, for example by a screwing connection. Alternatively, the bolt and the frame structure are made of a single piece.

In a preferred embodiment of the invention, the respective gear rack forms the second or third side of the frame structure. Alternatively, the respective gear rack is screwed to the second or third side of the frame structure.

In a preferred embodiment of the invention, the bolt opening is aligned in the middle of the housing and is therefore spaced apart by the same distance from the top and the bottom of the housing. This increases the symmetry of the housing. Preferably, the bolt opening is also spaced apart by the same distance from the left side and the right side of the housing.

In a preferred embodiment of the invention, the bolt opening is arranged in a front side of the housing, wherein the handle is attached to a side (left side or right side) of the housing.

In a preferred embodiment of the invention, the gear is arranged rotatable but stationary with respect to the housing.

In a preferred embodiment of the invention, the gear has a cross section that is circular or deviates from a circular cross section.

In a preferred embodiment of the invention, the handle comprises a shaft, wherein the shaft is connected to an axis of rotation of the gear.

In a preferred embodiment of the invention, the shaft of the handle and the gear are attached to each other in a poka yoke manner so that the shaft of the handle can only be attached to the gear at a certain angle of rotation. For example, the shaft should only be attached in two positions to the gear, wherein both positions differ by 180°. This allows the shaft to be pressed in the same directions to open the safety door no matter whether the door handle system is installed on safety doors that open to the left or on safety doors that open to the right.

In a preferred embodiment of the invention, the bolt is arranged closer to the gear in the first position than in the second position of the frame structure.

In a preferred embodiment of the invention, the bolt is arranged stationary with respect to the frame structure. If the frame structure is displaced, the bolt is so too. The bolt cannot be moved independently from the frame structure.

In a preferred embodiment of the invention, the gear is in contact with the gear rack of the second and third side in the starting position. Upon rotating from the starting position into the end position, the gear is only in contact with the gear rack of the second side or the gear rack of the third side. This allows the handle to be rotated in two (opposite) directions, thereby moving the frame structure in the same direction. Since the gear is only in contact with the gear racks of the second and third side in the starting position, the gear racks will not block the rotation of the gear itself.

In a preferred embodiment of the invention, the gear is on contact with only one gear rack in its end position. Therefore, pressing the handle in the opposite direction would result in displacing the frame structure in the other direction. The bolt then retracts back into the housing.

In a preferred embodiment of the invention, the gear in form of the sector gear comprises a plurality of teeth, wherein the first tooth is in contact with the gear rack of the second side when the sector gear is in the starting position and wherein the last tooth is in contact with the gear rack of the third side when the sector gear is in the starting position. This allows the handle to be turned clockwise or counter-clockwise, wherein the frame structure moves in the same direction.

In a preferred embodiment of the invention, the first and the last tooth are smaller than the teeth in between. This reduces the changes that the gear might get stuck between the two gear racks. The first or the last tooth then push the frame structure further to the bolt opening until the neighboured second or the neighboured next-to-last tooth gets into contact with the respective gear rack to push it even further. The wording "smaller" means that the respective tooth does not protrude as far as the other ones. In other word, the length is shorter.

In a preferred embodiment of the invention, the gear rack of the second side comprises a first and a second tooth, wherein the first tooth of the sector gear rests in between them in the starting position. The first tooth of the gear rack of the second side is larger than the second tooth of the gear rack of the second side. The first tooth of the gear rack of the second side is arranged closer to the bolt than the second tooth of the gear rack of the second side. In addition or alternatively, the gear rack of the third side comprises a first and a second tooth, wherein the last tooth of the sector gear rests in between them in the starting position. The first tooth of the gear rack of the third side is larger than the second tooth of the gear rack of the third side. The first tooth of the gear rack of the third side is arranged closer to the bolt than the second tooth of the gear rack of the third side. This measure also assures that the gear does not get stuck between the two gear racks. The first or the last tooth of the gear are still be able to push the frame structure and do not get stuck with the tooth next in line within the respective gear rack, because this tooth (next in line) is smaller than the previous one. The wording "smaller" means that that the respective tooth does not protrude as far as the ne. In other word, the length is shorter

In a preferred embodiment of the invention, the gear is configured to get (all the time) into contact with the gear rack of the second side between the starting position and the end position if the handle is pressed counter-clockwise and wherein the gear is configured to get (all the time) into contact with the gear rack of the third side between the starting position and the end position if the handle is pressed clockwise. However, the frame structure is pushed in the same direction, no matter in what direction the handle is pressed.

In a preferred embodiment of the invention, the teeth on the gear in form of a sector gear used for getting into contact with the corresponding gear rack are arranged within an angular range that is less than 190°. Therefore, the teeth are not arranged around 360° around the axis of rotation of the gear.

In a preferred embodiment of the invention, the bolt unit comprises at least one bolt locker which is arranged within the housing, wherein the at least one bolt locker is configured to engage with the bolt in the first position of the frame structure thereby preventing the bolt from being accidently extended out of the housing.

In a preferred embodiment of the invention, the bolt comprises a recess into which the bolt locker engages.

In a preferred embodiment of the invention, the bolt locker is spring loaded. This means that the bolt locker automatically engages with the bolt if the frame structure reaches its first position.

In a preferred embodiment of the invention, the door handle system comprises a lock unit. The lock unit comprises a housing, wherein the housing has a lock opening. The bolt is insertable into the lock opening when the frame structure moves to the second position and if the safety door is in a closed state. The lock unit comprises a sensor module, wherein the sensor module is configured to release the bolt locker thereby allowing the bolt to be extended out of the housing of the bolt unit upon operating the handle.

In a preferred embodiment of the invention, the sensor module is configured to apply a force to move the bolt locker. For example, this can be done by using a magnet or by moving an activation means like a lever for example.

In a preferred embodiment of the invention, the sensor module is configured to transmit a status signal to a processing unit upon locking and/or opening of the safety door. The processing unit can be a central processing unit which in turn controls a machinery (like a robot) within in sealed environment protected by the door handle system. If the safety door is open, then the machinery cannot start. However, the processing unit can also part of the control of the machinery. In that case, the sensor module is directly linked to the machinery.

In a preferred embodiment of the invention, the bolt unit is configured to be mounted to a safety door that opens to the right or by turning the bolt unit by 180° to a safety door that opens to the left without changing the frame structure. The wording "turning the bolt unit by 180°" is to be understood in such a way that the handle is still arranged on the same side of the safety door.

In a preferred embodiment of the invention, the housing of the bolt unit comprises a fastening opening opposite to the bolt opening. The frame structure comprises a fourth side opposite to the first side, wherein the fourth side comprises a fastening part. The fastening part is configured to protrude out of the fastening opening of the housing if the frame structure is in the first position. The fastening part is arranged within the housing if the frame structure is in the second position. The fastening part is configured to engage with a fastening mean thereby limiting the movement of the frame structure respective to the housing. It is very beneficial that an additional fastening part is present. An operator who wants to go into a sealed environment (for example a cage in which a robot operates) can indicate his presents in the sealed environment by attaching a personal lock (for example a U-Bolt lock) to the fastening part. In return, the bolt will not move out of the bolt opening, because the movement is limited by the fastening mean attached by the operator since the fastening mean cannot be moved into the housing through the fastening opening. As such, even if the bolt stopper engages with the activation mean, the bolt stopper cannot switch from the blocking position into the release position. Therefore, the door handle system would not be able to transmit a status signal indicating that the safety door is successfully closed thereby allowing a machinery inside the sealed environment to start up.

In a preferred embodiment of the invention, the fastening part comprises a joint and is therefore configured to be rotated (around the axis through the joint). Preferably, the fastening part comprises a fastener which is jointly connected to the fastening part.

In a preferred embodiment of the invention, the first side and the fourth side of the frame structure are parallel to each other. In addition or alternatively, the second side and the third side of the frame structure are parallel to each other.

In a preferred embodiment of the invention, the bolt and/or the frame structure are made of steel, especially stainless steel. The same could also apply for the respective gear rack and/or the gear itself.

Different embodiments of the invention will be described in the following, by way of example and with reference to the drawings. The same elements are provided with the same reference signs. The figures show in detail:
- Figure 1:: an installation of a door handle system according to the present invention at a safety door in form of a swing door and a sliding door;
- Figures 2A, 2B:: a door handle system installed at a safety door with a bolt unit and a lock unit, wherein the safety door opens to the right;
- Figures 3A, 3B:: a door handle system installed at a safety door with a bolt unit and a lock unit, wherein the safety door opens to the left;
- Figure 4:: an embodiment of a frame structure of the bolt unit together with a gear arranged in a receiving room enclosed by the frame structure;
- Figure 5:: the embodiment of figure 4, wherein the movement of the gear from a starting position to an end position with respect to the frame structure is described;
- Figure 6:: a similar embodiment as the one of figure 5 with the bolt unit being installed on a safety door that opens to the left instead;
- Figure 7:: an embodiment describing how the shaft of the handle is attached to the gear in a poka yoke manner;
- Figure 8:: an embodiment describing how the movement of the bolt is blockedby the use of a bolt locker; and
- Figure 9:: an embodiment describing how an operator can attach a personal lock to the frame structure so that the door handle system cannot close a safety door.

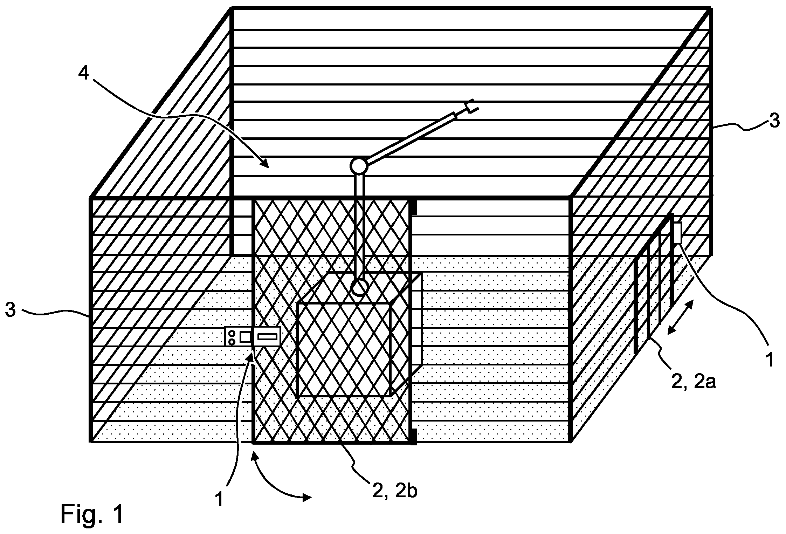

Figure 1 shows a door handle system 1 for a safety door 2, especially for a sliding door 2a or swing door 2b. Furthermore, a cage 3 is shown enclosing a sealed environment 4 in which a machine, for example in form of a robot, is operating. Upon opening the safety door 2, the door handle system 1 is preferably configured to transmit a status update so that the machine within the sealed environment 4 stops. This status update could be transmitted directly to the machine or indirectly via a central processing unit (not shown), which in turn turns off the machine.

Upon closing the safety door 2, the door handle system 1 is preferably configured to transmit another status update so that the machine arranged within the sealed environment 4 resumes operation.

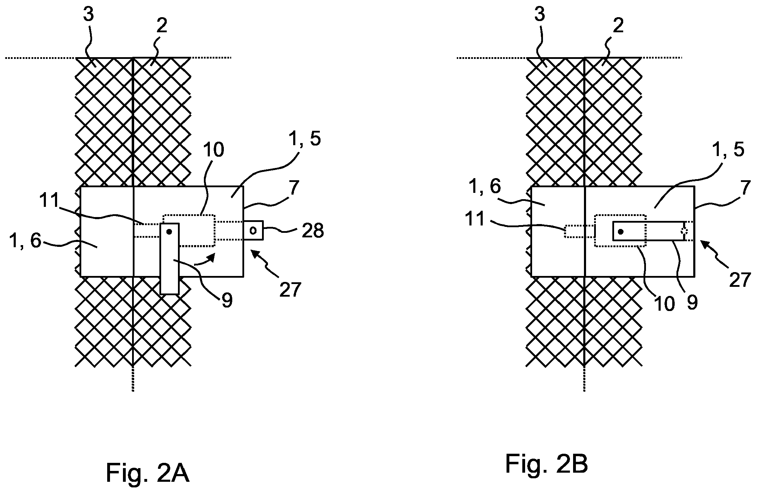

Figures 2A and 2B show an embodiment of the door handle system 1 arranged on a safety door 2.

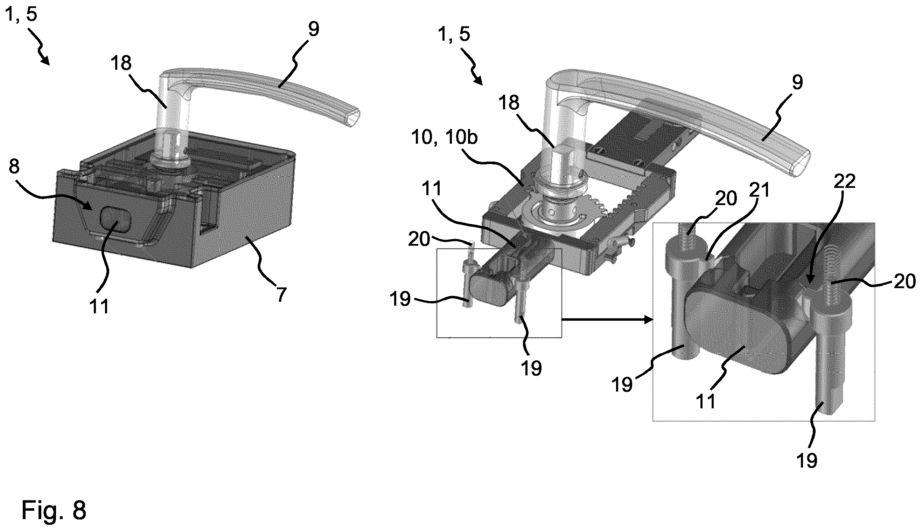

As can be seen, the door handle system 1 comprises two units. A bolt unit 5 and a lock unit 6. The bolt unit 5 comprises a housing 7 with a bolt opening 8 (shown for example in figure 8), and a handle 9. The handle 9 is arranged at the housing 7. The bolt unit 5 comprises a frame structure 10 with a bolt 11. The bolt 11 is moveable respective to the housing 7. The bolt 11 can be moved out of the bolt opening 8 of the housing 7 for engaging with a corresponding lock opening of the lock unit 6. Within figure 2A, the bolt 11 is arranged within the housing 7 of the bolt unit 5. Within figure 2B, the bolt 11 is pushed out of the housing 7 of the bolt unit 5 into the corresponding lock opening of the lock unit 6. To do so, the handle 9 is pressed and (in this case) rotated by 90° in a counter-clockwise direction. As can be seen, the frame structure 10 is displaced thereby pushing the bolt 11 out of the bolt opening 8.

In figure 2A, the frame structure 10 is in a first position. The bolt 11 is arranged within the housing 7 of the bolt unit 5. In figure 2B, the frame structure 10 is in a second position. The bolt 11 protrudes out of the bolt opening 8 of the housing 7 of the bolt unit 5.

The housing 7 of the bolt unit 5 comprises a fastening opening 27 opposite to the bolt opening 8. The frame structure 10 comprises a fourth side 10d opposite to the first side 10a. The fourth side 10d comprises a fastening part 28. The fastening part 28 is configured to protrude out of the fastening opening 27 of the housing 7 if the frame structure 10 is in the first position (shown in figure 2A). Contrary to that, the fastening part 28 is arranged within the housing 7 if the frame structure 20 is in the second position. The fastening part 28 is configured to engage with a fastening mean (for example a U-bolt lock) thereby limiting the movement of the frame structure 10 respective to the housing 7.

Within Figures 2A and 2B, the lock unit 6 is configured to be arranged stationary and the bolt unit 5 is configured to be arranged on the movable safety door 2. In general, the bolt unit 5 could also arranged stationary and the lock unit 6 could be arranged on the movable safety door 2.

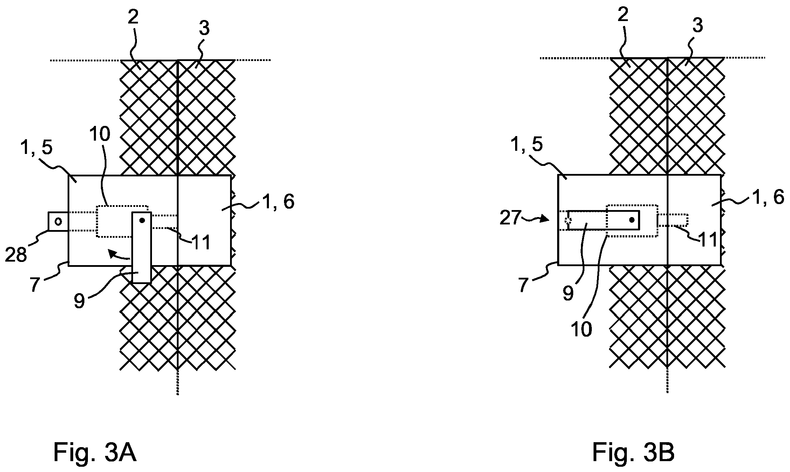

Within Figures 3A and 3B, the bolt unit 5 is turned by 180° and can therefore be used at a safety door 2 that opens to the left. The movement of the handle 9 stays the same. The user can press the handle 9 in a clockwise direction for pushing the bolt 11 out of the bolt opening 8.

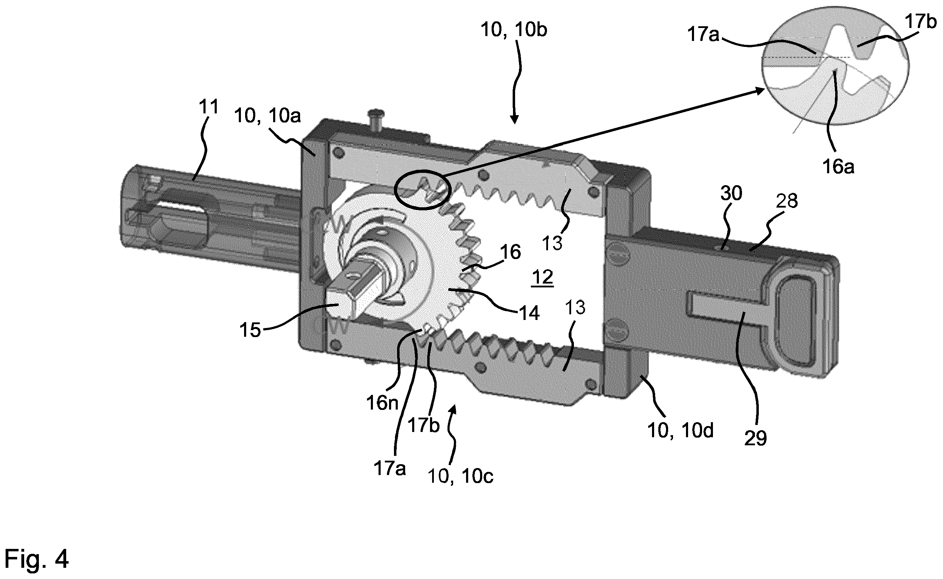

Figure 4 shows the frame structure 10 in more detail. The frame structure 10 comprises a first side 10a, a second side 10b, a third side 10c and a fourth side 10d. The first and the fourth side 10a, 10d are preferably arranged in parallel. The second and the third side 10b, 10c are preferably arranged in parallel.

The second and third side 10b, 10c are preferably arranged perpendicular to the first and the fourth side 10a, 10d.

The frame structure 10 is arranged in the housing 7 of the bolt unit 5. The frame structure 10 is moveable with respect to the housing 7. The frame structure 10 encloses a receiving room 12.

The bolt 11 is arranged at the first side 10a of the frame structure 10. The bolt 11 can be screwed to the frame structure 10. Also, the bolt 11 and the frame structure 10 can be made of a single piece.

The second side 10b and the third side 10c each comprise a gear rack 13 directed to the receiving room 12, so that the gear racks 13 of the second and third side 10b, 10c face each other. In that case, the gear racks 13 are screwed to the frame structure 10. The gear racks 13 are preferably arranged parallel to each other. However, the gear racks 13 and the frame structure 10 could be made of a single piece. Both gear racks 13 preferably have the same number of teeth. Both gear racks 13 are preferably arranged symmetrically to each other, especially defined by a longitudinal axis running through the frame structure 10.

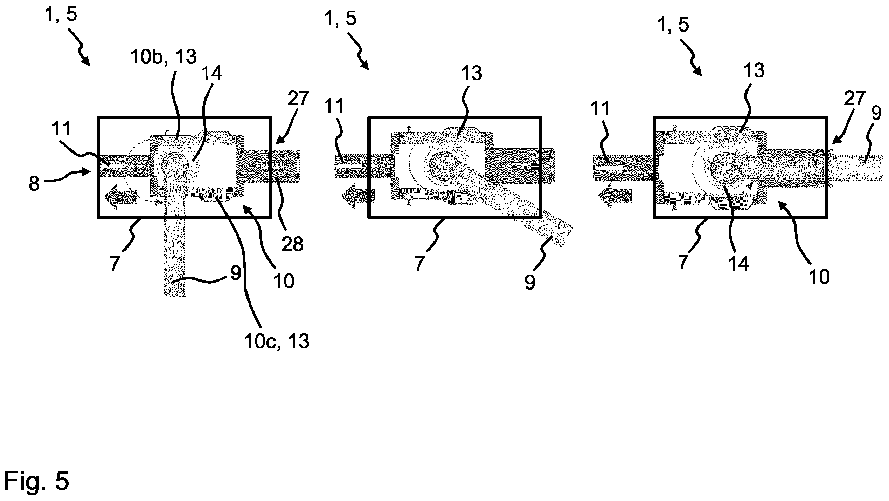

The bolt unit 5 comprises a gear 14, especially in form of a sector gear 14, which is arranged within the receiving room 12. The handle 9 is attached to the gear 14 so that pressing the handle 9 translates into a rotation of the gear 14. Upon rotation of the gear 14 from a starting position (shown in figure 4) to an end position (shown in figure 5), the gear 14 is configured to get into contact with the corresponding gear rack 13, causing the frame structure 10 to be displaced from the first position into the second position in relation to the housing 7 thereby pushing the bolt 11 out of the bolt opening 8. As indicated by the arrows, the gear 14 can be rotated clockwise or counter-clockwise. If rotated counter-clockwise, then the gear 14 will come into contact with the gear rack 13 of the second side 10b. If rotated clockwise, then the gear 14 will come into contact with the gear rack 13 of the third side 10c. In both times, the frame structure 10 will move in the same direction (from the first position to the second position) with respect to the housing 7.

The gear 14 is arranged rotatable but stationary with respect to the housing 7.

The housing can have guiding nuts for guiding the frame structure 10.

The handle 9 comprises a shaft 15, wherein the shaft 15 is connected to an axis of rotation of the gear 14.

As can be seen, the gear 14 is in contact with the gear rack 13 of the second side 10b and the gear rack 13 of third side 10c when the gear 14 is in the starting position. Upon rotating from the starting position into the end position, the gear 14 is only in contact with one gear rack 13, namely the gear rack 13 of the second side 10b or the gear rack 13 of the third side 10c.

The gear 14 in form of the sector gear 14 comprises a plurality of teeth 16, wherein a first tooth 16a is in contact with the gear rack 13 of the second side 10b when the sector gear 14 is in the starting position. A last tooth 16n is in contact with the gear rack 13 of the third side 10c when the sector gear 14 is in the starting position.

As also can be seen, the first tooth 16a and the last tooth 16n of the gear 14 are smaller (shorter in length) than the teeth 16 in between. This prevents the sector gear 14 from being stuck between the two gear racks 13.

The same preferably also applies to the gear rack 13 of the second and third side 10b, 10c. The gear rack 13 of the second side 10b comprises a first tooth 17a and a second tooth 17b between which the first tooth 16a of the sector gear 14 rests in the starting position. The first tooth 17a of the gear rack 13 of the second side 10b is larger (protrudes further into the receiving room 12) than the second tooth 17b of the gear rack 13 of the second side 10b. In addition, the first tooth 17a of the gear rack 13 of the second side 10b is arranged closer to the bolt 11 than the second tooth 17b of the gear rack 13 of the second side 10b. In addition, the gear rack 13 of the third side 10c comprises a first tooth 17a and a second tooth 17b in between which the last tooth 16n of the sector gear 14 rests in the starting position. The first tooth 17a of the gear rack 13 of the third side 10c is larger (protrudes further into the receiving room 12) than the second tooth 17b of the gear rack 13 of the third side 10c. The first tooth 17a of the gear rack 13 of the third side 10c is arranged closer to the bolt 11 than the second tooth 17b of the gear rack 13 of the third side 10c.

The teeth 16, 16a, 16n on the gear 14 in form of a sector gear 14 used for getting into contact with the corresponding gear rack 13 are arranged within an angular range that is less than 190°. Preferably, (approximately) half of the teeth 16, 16a, 16n get in contact with the gear rack 13 of the second side 10b if the sector gear 14 is rotated counter-clockwise and (approximately) the other half of the of the teeth 16, 16a, 16n get in contact with the gear rack 13 of the third side 10c if the sector gear 14 is rotated clockwise.

In addition, it can be seen that the fourth side 10d comprises the fastening part 28. The fastening part 28 is configured to engage with a fastening mean (for example a U-bolt lock) thereby limiting the movement of the frame structure 10 respective to the housing 7. The fastening part 28 comprises fastener 29 which is connected to the fastening part 28 through a joint 30. The fastener 29 is therefore configured to be rotated (around the axis through the joint 30). The fastener 29 comprises an opening so that a U-bolt lock of a user can engage with the opening, thereby preventing that the bolt 11 protrudes out of the bolt opening 8.

Figure 5 describes the movement of the gear 14 from the starting position to the end position with respect to the frame structure 10. In the left drawing, the starting position is shown which was described in figure 4. Upon pressing the handle 9 in a counter-clockwise direction, the teeth 16, 16a of the sector gear 14 start engaging with the corresponding teeth 17a, 17b of the gear rack 13 of the second side 10b of the frame structure 10, thereby displacing the frame structure 10 to the left. This position is shown by the drawing in the middle. After further pressing the handle 9 in the counter-clockwise position, the end position is reached as shown in the drawing to the right. After leaving the starting position, the sector gear 14 only engages with one gear rack 13. As can also be seen, the handle 9 and the sector gear 14 are arranged stationary with respect to the housing 7.

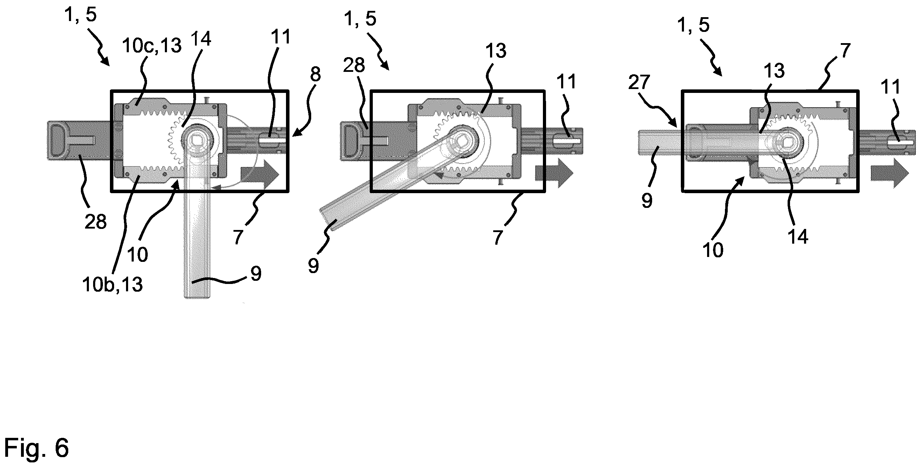

Figure 6 describes a similar embodiment as figure 5. However, the bolt unit 5 is rotated by 180°. In that regard, the bolt unit 5 can be attached for safety doors 2 that open to the left. In the left drawing, the starting position is shown. Upon pressing the handle 9 in a clockwise direction, the teeth 16, 16a of the sector gear 14 start engaging with the corresponding teeth 17a, 17b of the gear rack 13 of the third side 10c of the frame structure 10, thereby displacing the frame structure 10 to the left. This position is shown by the drawing in the middle. After further pressing the handle 9 in the clockwise position, the end position is reached as shown in the drawing to the right. After leaving the starting position, the sector gear 14 only engages with one gear rack 13. As can also be seen, the handle 9 and the sector gear 14 are arranged stationary with respect to the housing 7. The handle 9 could also be rotated in the counter-clockwise direction.

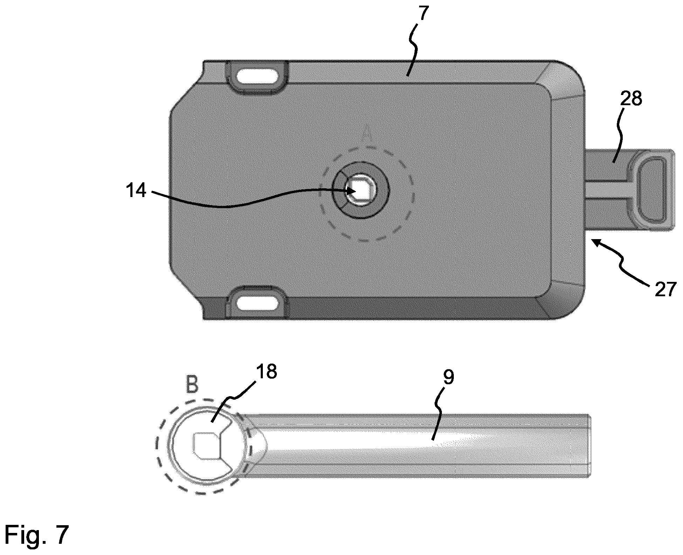

Figure 7 describes that a shaft 18 of the handle 9 and the gear 14 are attached to each other in a poka yoke manner so that the shaft 18 of the handle 9 can only be attached to the gear 14 at a certain angle of rotation. In that case, the form of the connection of the shaft 18 and the form of the corresponding connection of the gear 14 is such that the handle 9 can only attached at one position to the gear 14. However, it is also possible that the handle 9 can be attached at two or three positions to the gear 14. For example, the handle 9 can be installed in a 90° and a 270 ° position only. The 270 ° position could be used for right hinged doors 2 and the 90° position could be used for left hinged doors 2. If the whole door handle system 1 is rotated by 180°, then the 270 ° position could be used for left hinged doors 2 and the 90° position could be used for right hinged doors 2. Preferably, the handle 9 can always be attached the same way, no matter whether the bolt unit 5 is attached to safety doors 2 that open to the left or to safety doors 2 that open to the right. In other words, the handle can be orientated the same in the starting position. Thus, the user can rotate the handle 9 in the same direction. Therefore, the user expectations are not disturbed.

Figure 8 shows an embodiment of a bolt unit 5 that comprises at least one bolt locker 19 which is arranged within the housing 7 of the bolt unit 5. The at least one bolt locker 19 is configured to engage with the bolt 11 in the first position of the frame structure 10 thereby preventing the bolt 11 from being released out of the housing 7. The bolt 11 cannot move to the second position, because the bolt locker 19 blocks that movement. The bolt locker 19 comprises a spring 20 and is therefore spring loaded. Thus, the bolt locker 19 automatically engages with the bolt 11 if the frame structures 10 reaches its first position. The bolt locker 19 which preferably is in the form of a bolt, comprises a protrusion 21 which is configured to engage with a corresponding recess 22 in the bolt 11, thereby locking the movement of the bolt 11. In turn, the handle 9 cannot be rotated anymore. In figure 8, two bolt lockers 19 are provided, wherein the bolt 11 rests in between both bolt lockers 19 when the frame structure 10 is in the first position.

For disengaging the bolt locker 19, the lock unit 6 preferably comprises a sensor module (not shown), wherein the sensor module is configured to release the bolt locker 19 thereby allowing the bolt 11 to be extended from the housing 7 of the bolt unit 5 upon pressing the handle 9. This disengaging can be achieved by applying a magnetic field or by applying mechanical activation means for example. In that case the bolt locker 19 would be lifted so that the protrusion 21 of the bolt locker 9 leaves the recess 22.

The sensor module can be connected to a central processing system which provides an information to unlock the bolt 11 to the sensor module. The sensor module can also comprise a card reader system or an NFC system, so that the user can unlock the bolt 11 directly at the door handle system 1.

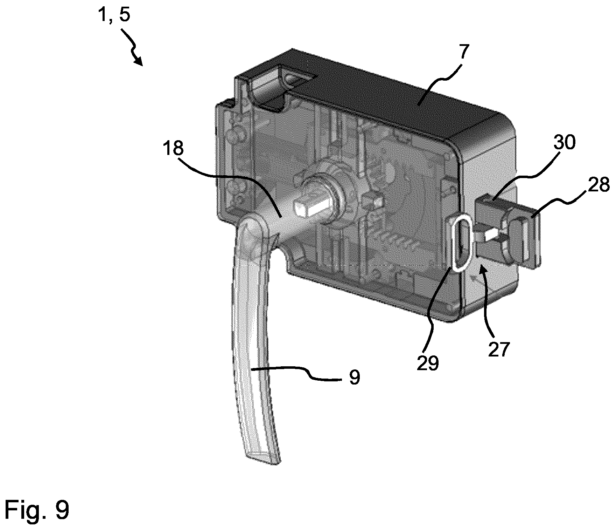

Figure 9 again shows the fastening part 28 which comprises the fastener 29. The fastener 29 is connected to the fastening part 28 through the joint 30. The fastener 29 is rotated around the axis of the joint 30 to ease the attachment of a U-bolt lock for example. By adding such a U-bolt lock, the fastening part 28 cannot be retracted into the fastening opening 27 anymore. Thus, a person can indicate his/her presence in the sealed environment 4.

The present invention may, of course, be carried out in other ways than those specifically set forth herein without departing from essential characteristics of the invention, which is defined by the appended claims.

The present embodiments are to be considered in all respects as illustrative and not restrictive, and all changes coming within the meaning and equivalency range of the appended claims are intended to be embraced therein.

**Reference signs**

| | |
|---|---|
| Door handle system | 1 |
| Safety door | 2 |
| Sliding door | 2a |
| Swing door | 2b |
| Cage | 3 |
| Sealed environment | 4 |
| Bolt unit | 5 |
| Lock unit | 6 |
| Housing (of bolt unit) | 7 |
| Bolt opening | 8 |
| Handle | 9 |
| Frame structure | 10 |
| Bolt | 11 |
| Receiving room | 12 |
| Gear rack | 13 |
| Gear (sector gear) | 14 |
| Shaft | 15 |
| Teeth (sector gear) | 16, 16a, 16n |
| Teeth (gear rack) | 17a, 17b |
| Shaft | 18 |
| Bolt locker | 19 |
| Spring | 20 |
| Protrusion (bolt locker) | 21 |
| Recess (bolt) | 22 |
| Fastening opening | 27 |
| Fastening part | 28 |
| Fastener | 29 |
| Joint | 30 |

## Claims

1. A door handle system (1) for a safety door (2), especially for a sliding door (2a) or swing door (2b), comprises the following features:
- a bolt unit (5) is provided, wherein the bolt unit (5) comprises a housing (7) with a bolt opening (8), and a handle (9), wherein the handle (9) is arranged at the housing (7);
- the bolt unit (5) comprises a frame structure (10) with a bolt (11), wherein the frame structure (10) is arranged in the housing (7) and wherein the frame structure (10) is moveable with respect to the housing (7);
- the frame structure (10) encloses a receiving room (12);
- the bolt (11) is arranged at a first side (10a) of the frame structure (10), wherein a second side (10b) and a third side (10c) of the frame structure (10) are arranged opposite to each other;
- the second side (10b) and the third side (10c) each comprise a gear rack (13) directed to the receiving room (12), so that the gear racks (13) of the second side (10b) and third side (10c) face each other;
- the bolt unit (5) comprises a gear (14), especially in form of a sector gear (14), which is arranged within the receiving room (12);
- the handle (9) is attached to the gear (14) so that pressing the handle (9) translates into a rotation of the gear (14);
- upon rotation of the gear (14) from a starting position to an end position, the gear (14) is configured to get into contact with the corresponding gear rack (13), causing the frame structure (10) to be displaced from a first position into a second position in relation to the housing (7) thereby pushing the bolt (11) out of the bolt opening (8).

2. The door handle system (1) according to claim 1, wherein
the gear (14) is arranged rotatable but stationary with respect to the housing (7).

3. The door handle system (1) according to claim 1 or 2, wherein the handle (9) comprises a shaft (18), wherein the shaft (18) is connected to an axis of rotation of the gear (14).

4. The door handle system (1) according to claim 3, wherein
the shaft (18) of the handle (9) and the gear (14) are attached to each other in a poka yoke manner so that the shaft (18) of the handle (9) can only be attached to the gear (14) at a certain angle of rotation.

5. The door handle system (1) according to any of the preceding claims, wherein the bolt (11) is arranged closer to the gear (14) in the first position than in the second position of the frame structure (10).

6. The door handle system (1) according to any of the preceding claims, wherein the gear (14) is in contact with the gear rack (13) of the second side (10b) and the gear rack (13) of third side (10c) in the starting position and wherein the gear (14) is only in contact with the gear rack (13) of the second side (10b) or the gear rack (13) of the third side (10c) upon rotating from the starting position into the end position.

7. The door handle system (1) according to any of the preceding claims, wherein the gear (14) in form of the sector gear (14) comprises a plurality of teeth (16, 16a, 16n), wherein the first tooth (16a) is in contact with the gear rack (13) of the second side (10b) when the sector gear (14) is in the starting position and wherein the last tooth (16n) is in contact with the gear rack (13) of the third side (10c) when the sector gear (14) is in the starting position.

8. The door handle system (1) according to claim 7, wherein the first and the last tooth (16a, 16n) are smaller than the teeth (16) of the sector gear (14) in between.

9. The door handle system (1) according to claim 7 or 8, wherein the gear rack (13) of the second side (10b) comprises a first and a second tooth (17a, 17b) in between the first tooth (16a) of the sector gear (14) rests in the starting position, wherein the first tooth (17a) of the gear rack (13) of the second side (10b) is larger than the second tooth (17b) of the gear rack (13) of the second side (10b) and wherein the first tooth (17a) of the gear rack (13) of the second side (10b) is arranged closer to the bolt (11) than the second tooth (17b) of the gear rack (13) of the second side (10b); and/or
wherein the gear rack (13) of the third side (10c) comprises a first and a second tooth (17a, 17b) in between the last tooth (16n) of the sector gear (14) rests in the starting position, wherein the first tooth (17a) of the gear rack (13) of the third side (10c) is larger than the second tooth (17b) of the gear rack (13) of the third side (10c) and wherein the first tooth (17a) of the gear rack (13) of the third side (10c) is arranged closer to the bolt (11) than the second tooth (17b) of the gear rack (13) of the third side (10c).

10. The door handle system (1) according to any of the preceding claims, wherein the gear (14) is configured to get into contact with the gear rack (13) of the second side (10b) between the starting position and the end position if the handle (9) is pressed counter-clockwise and wherein the gear (14) is configured to get into contact with the gear rack (13) of the third side (10c) between the starting position and the end position if the handle (9) is pressed clockwise.

11. The door handle system (1) according to any of the preceding claims, wherein the teeth (16a, 16b, 16n) on the gear (14) in form of a sector gear (14) used for getting into contact with the corresponding gear rack (13) are arranged within an angular range that is less than 190°.

12. The door handle system (1) according to any of the preceding claims, wherein the bolt unit (5) comprises at least one bolt locker (19) which is arranged within the housing (7), wherein the at least one bolt locker (19) is configured to engage with the bolt (11) in the first position of the frame structure (10) thereby preventing the bolt (11) to be accidently extended from the housing (7).

13. The door handle system (1) according to claim 12, wherein the door
handle system (1) comprises a lock unit (6), wherein the lock unit (6) comprises a housing (7), wherein the housing (7) has a lock opening, wherein the bolt (11) is insertable into the lock opening in a closed state of the safety door (2) when the frame structure (10) moves to the second position, wherein the lock unit (6) comprises a sensor module, wherein the sensor module is configured to release the bolt locker (19) thereby allowing the bolt (11) to be extended from the housing (7) of the bolt unit (5) upon pressing the handle (9).

14. The door handle system (1) according to any of the preceding claims, wherein the bolt unit (5) is configured to be mounted to a safety door (2) that opens to the right or by turning the bolt unit (5) by 180 ° to a safety door (2) that opens to the left without changing the frame structure (10).

15. The door handle system (1) according to any of the preceding claims, wherein the housing (7) of the bolt unit (5) comprises a fastening opening (27) opposite to the bolt opening (8) and wherein the frame structure (10) comprises a fourth side (10d) opposite to the first side (10a), wherein the fourth side (10d) comprises a fastening part (28) and wherein the fastening part (28) is configured to protrude out of the fastening opening (27) of the housing (7) if the frame structure (10) is in the first position and wherein the fastening part (28) is arranged within the housing (7) if the frame structure (10) is in the second position and wherein the fastening part (28) is configured to engage with a fastening mean thereby limiting the movement of the frame structure (10) respective to the housing (7).

## Patentansprüche

1. Türgriffsystem (1) für eine Sicherheitstür (2), insbesondere für eine Schiebetür (2a) oder Schwenktür (2b), mit folgenden Merkmalen:
- eine Riegeleinheit (5) ist vorgesehen, wobei die Riegeleinheit (5) ein Gehäuse (7) mit einer Riegelöffnung (8) und einen Griff (9) aufweist, wobei der Griff (9) an dem Gehäuse (7) angeordnet ist;
- die Riegeleinheit (5) umfasst eine Rahmenstruktur (10) mit einem Riegel (11), wobei die Rahmenstruktur (10) in dem Gehäuse (7) angeordnet ist und wobei die Rahmenstruktur (10) gegenüber dem Gehäuse (7) bewegbar ist;
- die Rahmenstruktur (10) umschließt einen Aufnahmeraum (12);
- der Riegel (11) ist an einer ersten Seite (10a) der Rahmenstruktur (10) angeordnet, wobei eine zweite Seite (10b) und eine dritte Seite (10c) der Rahmenstruktur (10) einander gegenüberliegend angeordnet sind;
- die zweite Seite (10b) und die dritte Seite (10c) umfassen jeweils eine zu dem Aufnahmeraum (12) gerichtete Zahnstange (13), so dass die Zahnstangen (13) der zweiten Seite (10b) und der dritten Seite (10c) einander zugewandt sind;
- die Riegeleinheit (5) umfasst ein Zahnrad (14), insbesondere in Form eines Segmentzahnrads (14), das innerhalb des Aufnahmeraums (12) angeordnet ist;
- der Griff (9) ist an dem Zahnrad (14) befestigt, so dass ein Drücken des Griffs (9) in eine Drehung des Zahnrads (14) übersetzt wird;
- bei einer Drehung des Zahnrads (14) von einer Ausgangsposition in eine Endposition ist das Zahnrad (14) dazu eingerichtet, mit der entsprechenden Zahnstange (13) in Kontakt zu gelangen, wodurch bewirkt wird, dass die Rahmenstruktur (10) von einer ersten Position in eine zweite Position in Bezug auf das Gehäuse (7) verschoben wird, wodurch der Riegel (11) aus der Riegelöffnung (8) gedrückt wird.

2. Türgriffsystem (1) nach Anspruch 1, wobei
das Zahnrad (14) drehbar, aber stationär in Bezug auf das Gehäuse (7) angeordnet ist.

3. Türgriffsystem (1) nach Anspruch 1 oder 2, wobei der Griff (9) eine Welle (18) aufweist, wobei die Welle (18) mit einer Drehachse des Zahnrads (14) verbunden ist.

4. Türgriffsystem (1) nach Anspruch 3, wobei
die Welle (18) des Griffs (9) und das Zahnrad (14) in einer Poka-Yoke-Weise aneinander befestigt sind, so dass die Welle (18) des Griffs (9) nur bei einem bestimmten Drehwinkel an dem Zahnrad (14) befestigt sein kann.

5. Türgriffsystem (1) nach einem der vorhergehenden Ansprüche, wobei der Riegel (11) in der ersten Position näher an dem Zahnrad (14) angeordnet ist als in der zweiten Position der Rahmenstruktur (10).

6. Türgriffsystem (1) nach einem der vorhergehenden Ansprüche, wobei das Zahnrad (14) in der Ausgangsposition in Kontakt mit der Zahnstange (13) der zweiten Seite (10b) und der Zahnstange (13) der dritten Seite (10c) ist und wobei das Zahnrad (14) nur bei einer Drehung von der Ausgangsposition in die Endposition in Kontakt mit der Zahnstange (13) der zweiten Seite (10b) oder der Zahnstange (13) der dritten Seite (10c) ist.

7. Türgriffsystem (1) nach einem der vorhergehenden Ansprüche, wobei das Zahnrad (14) in Form des Segmentzahnrads (14) eine Vielzahl von Zähnen (16, 16a, 16n) umfasst, wobei der erste Zahn (16a) in Kontakt mit der Zahnstange (13) der zweiten Seite (10b) ist, wenn das Segmentzahnrad (14) in der Ausgangsposition ist, und wobei der letzte Zahn (16n) in Kontakt mit der Zahnstange (13) der dritten Seite (10c) ist, wenn das Segmentzahnrad (14) in der Ausgangsposition ist.

8. Türgriffsystem (1) nach Anspruch 7, wobei der erste und der letzte Zahn (16a, 16n) kleiner sind als die Zähne (16) des Segmentzahnrads (14) dazwischen.

9. Türgriffsystem (1) nach Anspruch 7 oder 8, wobei die Zahnstange (13) der zweiten Seite (10b) einen ersten und einen zweiten Zahn (17a, 17b) umfasst, zwischen denen der erste Zahn (16a) des Segmentzahnrads (14) in der Ausgangsposition ruht, wobei der erste Zahn (17a) der Zahnstange (13) der zweiten Seite (10b) größer ist als der zweite Zahn (17b) der Zahnstange (13) der zweiten Seite (10b) und wobei der erste Zahn (17a) der Zahnstange (13) der zweiten Seite (10b) näher an dem Riegel (11) angeordnet ist als der zweite Zahn (17b) der Zahnstange (13) der zweiten Seite (10b); und/oder
wobei die Zahnstange (13) der dritten Seite (10c) einen ersten und einen zweiten Zahn (17a, 17b) umfasst, zwischen denen der letzte Zahn (16n) des Segmentzahnrads (14) in der Ausgangsposition ruht, wobei der erste Zahn (17a) der Zahnstange (13) der dritten Seite (10c) größer ist als der zweite Zahn (17b) der Zahnstange (13) der dritten Seite (10c) und wobei der erste Zahn (17a) der Zahnstange (13) der dritten Seite (10c) näher an dem Riegel (11) angeordnet ist als der zweite Zahn (17b) der Zahnstange (13) der dritten Seite (10c).

10. Türgriffsystem (1) nach einem der vorhergehenden Ansprüche, wobei das Zahnrad (14) dazu eingerichtet ist, mit der Zahnstange (13) der zweiten Seite (10b) zwischen der Ausgangsposition und der Endposition in Kontakt zu gelangen, wenn der Griff (9) gegen den Uhrzeigersinn gedrückt wird, und wobei das Zahnrad (14) dazu eingerichtet ist, mit der Zahnstange (13) der dritten Seite (10c) zwischen der Ausgangsposition und der Endposition in Kontakt zu gelangen, wenn der Griff (9) im Uhrzeigersinn gedrückt wird.

11. Türgriffsystem (1) nach einem der vorhergehenden Ansprüche, wobei die Zähne (16a, 16b, 16n) an dem Zahnrad (14) in Form eines Segmentzahnrads (14), das verwendet wird, um mit der entsprechenden Zahnstange (13) in Kontakt zu gelangen, innerhalb eines Winkelbereichs angeordnet sind, der kleiner als 190° ist.

12. Türgriffsystem (1) nach einem der vorhergehenden Ansprüche, wobei die Riegeleinheit (5) mindestens eine Riegelverriegelung (19) aufweist, die innerhalb des Gehäuses (7) angeordnet ist, wobei die mindestens eine Riegelverriegelung (19) dazu eingerichtet ist, mit dem Riegel (11) in der ersten Position der Rahmenstruktur (10) in Eingriff zu gelangen, wodurch verhindert wird, dass der Riegel (11) versehentlich aus dem Gehäuse (7) ausgefahren wird.

13. Türgriffsystem (1) nach Anspruch 12, wobei das Türgriffsystem (1) eine Verriegelungseinheit (6) umfasst, wobei die Verriegelungseinheit (6) ein Gehäuse (7) aufweist, wobei das Gehäuse (7) eine Verriegelungsöffnung aufweist, wobei der Riegel (11) in einem geschlossenen Zustand der Sicherheitstür (2) in die Verriegelungsöffnung einführbar ist, wenn sich die Rahmenstruktur (10) in die zweite Position bewegt, wobei die Verriegelungseinheit (6) ein Sensormodul umfasst, wobei das Sensormodul dazu eingerichtet ist, die Riegelverriegelung (19) freizugeben, wodurch ermöglicht wird, dass der Riegel (11) beim Drücken des Griffs (9) aus dem Gehäuse (7) der Riegeleinheit (5) ausgefahren wird.

14. Türgriffsystem (1) nach einem der vorhergehenden Ansprüche, wobei die Riegeleinheit (5) dazu eingerichtet ist, an einer sich nach rechts öffnenden Sicherheitstür (2) oder durch Drehen der Riegeleinheit (5) um 180° zu einer sich nach links öffnenden Sicherheitstür (2) montiert zu werden, ohne die Rahmenstruktur (10) zu wechseln.

15. Türgriffsystem (1) nach einem der vorhergehenden Ansprüche, wobei das Gehäuse (7) der Riegeleinheit (5) eine Befestigungsöffnung (27) gegenüber der Riegelöffnung (8) umfasst und wobei die Rahmenstruktur (10) eine vierte Seite (10d) gegenüber der ersten Seite (10a) aufweist, wobei die vierte Seite (10d) ein Befestigungsteil (28) umfasst und wobei das Befestigungsteil (28) dazu eingerichtet ist, aus der Befestigungsöffnung (27) des Gehäuses (7) herauszuragen, wenn sich die Rahmenstruktur (10) in der ersten Position befindet, und wobei das Befestigungsteil (28) innerhalb des Gehäuses (7) angeordnet ist, wenn sich die Rahmenstruktur (10) in der zweiten Position befindet, und wobei das Befestigungsteil (28) dazu eingerichtet ist, mit einem Befestigungsmittel in Eingriff zu gelangen, wodurch die Bewegung der Rahmenstruktur (10) relativ zu dem Gehäuse (7) begrenzt wird.

## Revendications

1. Système de poignée de porte (1) pour une porte de sécurité (2), en particulier pour une porte coulissante (2a) ou une porte battante (2b), comprenant les caractéristiques suivantes :
- il est prévu une unité boulon (5), l'unité boulon (5) comprenant un boîtier (7) avec une ouverture de boulon (8), et une poignée (9), la poignée (9) étant agencée au niveau du boîtier (7) ;
- l'unité boulon (5) comprend une structure de cadre (10) avec un boulon (11), la structure de cadre (10) étant agencée dans le boîtier (7) et la structure de cadre (10) pouvant être déplacée par rapport au boîtier (7) ;
- la structure de cadre (10) enferme un espace de réception (12) ;
- le boulon (11) est agencé au niveau d'un premier côté (10a) de la structure de cadre (10), un deuxième côté (10b) et un troisième côté (10c) de la structure de cadre (10) étant agencés à l'opposé l'un de l'autre ;
- le deuxième côté (10b) et le troisième côté (10c) comprennent chacun une crémaillère à pignon (13) dirigée vers la chambre de réception (12) de telle sorte que les crémaillères à pignons (13) du deuxième côté (10b) et du troisième côté (10c) sont tournées l'une vers l'autre ;
- l'unité boulon (5) comprend un pignon (14), en particulier sous la forme d'un secteur denté (14), qui est agencé à l'intérieur de la chambre de réception (12) ;
- la poignée (9) est attachée au pignon (14) de telle sorte que le fait d'appuyer sur la poignée (9) entraîne une translation dans une rotation du pignon (14) ;
- lors d'une rotation du pignon (14) depuis une position initiale jusqu'à une position finale, le pignon (14) est configuré pour venir en contact avec la crémaillère à pignon correspondante (13), amenant la structure de cadre (10) à être déplacée depuis une première position jusque dans une seconde position en relation avec le boîtier (7), poussant ainsi le boulon (11) hors de l'ouverture de boulon (8).

2. Système de poignée de porte (1) selon la revendication 1, dans lequel le pignon (14) est agencé de manière rotative mais stationnaire par rapport au boîtier (7).

3. Système de poignée de porte (1) selon la revendication 1 ou 2, dans lequel la poignée (9) comprend un arbre (18), dans lequel l'arbre (18) est connecté à un axe de rotation du pignon (14).

4. Système de poignée de porte (1) selon la revendication 3,
dans lequel l'arbre (18) de la poignée (9) et le pignon (14) sont attachés l'un à l'autre à la manière d'un Poka-Yoke de telle sorte que l'arbre (18) de la poignée (9) peut uniquement être attaché au pignon (14) sous un certain angle de rotation.

5. Système de poignée de porte (1) selon l'une quelconque des revendications précédentes,
dans lequel le boulon (11) est agencé plus proche du pignon (14) dans la première position que dans la seconde position de la structure de cadre (10).

6. Système de poignée de porte (1) selon l'une quelconque des revendications précédentes,
dans lequel le pignon (14) est en contact avec la crémaillère à pignon (13) du deuxième côté (10b) et la crémaillère à pignon (13) du troisième côté (10c) dans la position initiale et dans lequel le pignon (14) est uniquement contact avec la crémaillère à pignon (13) du deuxième côté (10b) ou la crémaillère à pignon (13) du troisième côté (10c) lors d'une rotation depuis la position initiale jusqu'à la position finale.

7. Système de poignée de porte (1) selon l'une quelconque des revendications précédentes,
dans lequel le pignon (14) sous la forme du secteur denté (14) comprend une pluralité de dents (16, 16a, 16n), dans lequel la première dent (16a) est en contact avec la crémaillère à pignon (13) du deuxième côté (10b) quand le secteur denté (14) est dans la position initiale et dans lequel la dernière dent (16n) est en contact avec la crémaillère à pignon (13) du troisième côté (10c) quand le secteur denté (14) est dans la position initiale.

8. Système de poignée de porte (1) selon la revendication 7, dans lequel la première et la dernière dent (16a, 16n) sont plus petites que les dents (16) du secteur denté (14) entre celles-ci.

9. Système de poignée de porte (1) selon la revendication 7 ou 8, dans lequel la crémaillère à pignon (13) du deuxième côté (10b) comprend une première et une deuxième dent (17a, 17b) tandis que la première dent (16a) du secteur denté (14) repose dans la position initiale, dans lequel la première dent (17a) de la crémaillère à pignon (13) du deuxième côté (10b) est plus grande que la deuxième dent (17b) de la crémaillère à pignon (13) du deuxième côté (10b) et dans lequel la première dent (17a) de la crémaillère à pignon (13) du deuxième côté (10b) est agencée plus proche du boulon (11) que la deuxième dent (17b) de la crémaillère à pignon (13) du deuxième côté (10b) ; et/ou
dans lequel la crémaillère à pignon (13) du troisième côté (10c) comprend une première et une deuxième dent (17a ,17b) tandis que la dernière dent (16n) du secteur denté (14) repose dans la position initiale, dans lequel la première dent (17a) de la crémaillère à pignon (13) du troisième côté (10c) est plus grande que la deuxième dent (17b) de la crémaillère à pignon (13) du troisième côté (10c), et dans lequel la première dent (17a) de la crémaillère à pignon (13) du troisième côté (10c) est agencée plus proche du boulon (11) que la deuxième dent (17b) de la crémaillère à pignon (13) du troisième côté (10c).

10. Système de poignée de porte (1) selon l'une quelconque des revendications précédentes,
dans lequel le pignon (14) est configuré pour venir en contact avec la crémaillère à pignon (13) du deuxième côté (10b) entre la position initiale et la position finale si l'on appuie sur la poignée (9) dans le sens inverse des aiguilles d'une montre et dans lequel le pignon (14) est configuré pour venir en contact avec la crémaillère à pignon (13) du troisième côté (10c) entre la position initiale et la position finale si l'on appui sur la poignée (9) dans le sens des aiguilles d'une montre.

11. Système de poignée de porte (1) selon l'une quelconque des revendications précédentes,
dans lequel les dents (16a, 16b, 16n) sur le pignon (14) sous forme de secteur denté (14) utilisées pour venir en contact avec la crémaillère à pignon correspondante (13) sont agencées avec une plage angulaire qui est inférieure à 190°.

12. Système de poignée de porte (1) selon l'une quelconque des revendications précédentes,
dans lequel l'unité boulon (5) comprend au moins un serre-boulon (19) qui est agencé à l'intérieur du boîtier (7), dans lequel ledit au moins un serre-boulon (19) est configuré pour s'engager avec le boulon (19) dans la première position de la structure de cadre (10), empêchant ainsi le boulon (11) d'être accidentellement en extension depuis le boîtier (7).

13. Système de poignée de porte (1) selon la revendication 12,
dans lequel le système de poignée de porte (1) comprend une unité de verrouillage (6), dans lequel l'unité de verrouillage (6) comprend un boîtier (7), dans lequel le boîtier (7) a une ouverture de verrouillage, dans lequel le boulon (11) peut être inséré jusque dans l'ouverture de verrouillage dans un état fermé de la porte de sécurité (2) quand la structure de cadre (10) se déplace jusqu'à la seconde position, dans lequel l'unité de verrouillage (6) comprend un module capteur, dans lequel le module capteur est configuré pour libérer le serre-boulon (19), permettant ainsi au boulon (11) d'être en extension depuis le boîtier (7) de l'unité boulon (5) au moment d'appuyer sur la poignée (9).

14. Système de poignée de porte (1) selon l'une quelconque des revendications précédentes,
dans lequel l'unité boulon (5) est configurée pour être montée sur une porte de sécurité (2) qui s'ouvre vers la droite ou en tournant l'unité boulon (5) à raison de 180° par rapport à une porte de sécurité (2) qui s'ouvre vers la gauche sans changer la structure de cadre (10).

15. Système de poignée de porte (1) selon l'une quelconque des revendications précédentes,
dans lequel le boîtier (7) de l'unité boulon (5) comprend une ouverture de fixation (27) opposée à l'ouverture de boulon (8) et dans lequel la structure de cadre (10) comprend un quatrième côté (10d) opposé au premier côté (10a),
dans lequel le quatrième côté (10d) comprend une partie de fixation (28) et dans lequel la partie de fixation (28) est configurée pour se projeter hors de l'ouverture de fixation (27) du boîtier (7) si la structure de cadre (10) est dans la première position et dans lequel la partie de fixation (28) est agencée à l'intérieur du boîtier (7) si la structure de cadre (10) est dans la seconde position et dans lequel la partie de fixation (28) est configurée pour s'engager avec un moyen de fixation limitant ainsi le déplacement de la structure de cadre (10) respectivement au boîtier (7).
